# EUROPÄISCHE PATENTANMELDUNG

(11) **EP 1 464 235 A1**
(43) Veröffentlichungstag der Anmeldung: **06.10.2004**
(21) Anmeldenummer: 03018981.5
(22) Anmeldetag: 21.08.2003
(51) Int. Cl.: A23L 1/054, A23L 1/0562, C13F 3/00, A23P 1/06, A23P 1/08, A23L 1/00

(54) **Verfahren zur Herstellung einer Lebensmittelzubereitung, die gelierende und/oder verdickende Eigenschaften aufweist**

(30) Priorität: 04.04.2003 DE 10315614
(71) Anmelder: Dr. AUGUST OETKER NAHRUNGSMITTEL KG, 33617 Bielefeld (DE)
(72) Erfinder: Fuchs, Helmuth, 49326 Melle (DE); Fretter, Christian, 32107 Bad Salzuflen (DE); Schwechheimer, Marlise, 33617 Bielefeld (DE); Losos, Thaddäus, 33729 Bielefeld (DE); Lieker, Sabine, Dr. rer. nat., 33739 Bielefeld (DE)
(74) Vertreter: Meyer, Gerd

(57) **Zusammenfassung**

Die vorliegende Erfindung betrifft ein Verfahren zur Herstellung einer Lebensmittelzubereitung, die dadurch gekennzeichnet ist, daß durch Vermischen gemahlener Gelatine mit einer mit Alkohol und/oder Flüssigkeit benetzten Saccharose oder anderen Zuckerarten im Verhältnis 1 : 1 bis 1 : 15 ein Produkt entsteht, das sich problemlos in wässrigen Lösungen, Emulsionen oder wasserhaltigen Lebensmitteln mit Temperaturen über 4 °C oder in wasserhaltigen Lebensmitteln löst oder quillt und anschließend bei längerer Standzeit bei einer Umgebungstemperatur unter 35 °C ein Gel oder eine Verdickung ausbildet.

## Beschreibung

Die vorliegende Erfindung betrifft ein Verfahren, bei welchem durch Vermischen von zerkleinerten, gemahlenen Gelier- und/oder Verdickungsmitteln, wie z.B. Gelatine oder dergleichen, mit einer Korngröße idealerweise unter 0,8 mm, mit angefeuchteter Saccharose oder anderen Zuckerarten ein Produkt entsteht, das sich problemlos in kalten wässrigen Lösungen, Emulsionen und wasserhaltigen Lebensmitteln, wie z.B. Milch, Joghurt, Sahne, Quark und dergleichen, löst und/oder quillt und anschließend bei längerer Standzeit ein Gel bzw. eine Verdickung ausbildet.

Gelatine wird in gemahlener Form oder als Blattgelatine traditionell in Haushalten zur Herstellung von Sahnetorten, Grützen, Götterspeisen und ähnlichen Erzeugnissen verwendet. Die im Handel erhältliche Gelatine muß zur Verarbeitung unter Haushaltsbedingungen zunächst in wenig kaltem Wasser längere Zeit quellen und anschließend über ihren Schmelzpunkt erwärmt werden. Die so gelöste Gelatine wird dem zu verdickenden bzw. zu gelierendem Lebensmittel zugegeben.

Dieser Verarbeitungsschritt stellt für eine Reihe von Verbrauchern ein Problem dar, da er sehr zeitaufwendig ist. Das gleichmäßige Unterziehen von gelöster Gelatine wird dadurch erschwert, daß sowohl die Gelatine als auch das anzudickende Lebensmittel annähernd die gleiche Temperatur aufweisen müssen. Ist die Gelatinelösung zu warm, kann es bei wärmeempfindlichen Lebensmitteln wie z.B. geschlagener Sahne zur Verflüssigung kommen. Ist die Gelatinelösung zu kalt, d.h. kurz vor ihrem Gelierpunkt, so erstarrt sie sofort beim Unterziehen unter Lebensmittel, die eine Temperatur unterhalb dem Schmelzpunkt der Gelatine aufweisen. Die Folge sind kleine bis große Klümpchen oder Gelatinefäden, die das Mundgefühl unangenehm beeinträchtigen.

Über den traditionellen Haushaltsbereich hinaus wird Gelatine in Backmischungen, hier insbesondere in Sahne- oder Cremefonds, eingesetzt. Diese Sahnefonds bestehen in der Regel zu einem Teil aus gemahlener Gelatine und zu mind. fünf Teilen eines geeigneten Trennmittels. Mischungen dieser Art lassen sich zwar durch starkes Rühren unter langsamer Zugabe von ca. 30 °C warmem Wasser in Lösung bringen. In der Regel gelingt dies aber nur unter Einsatz entsprechend schnell laufender Rührwerke, wie sie z.B. in Handwerksbetrieben üblich sind. Auch hier ist eine Vorquellung in Wasser notwendig, bevor das eigentlich zu gelierende Lebensmittel - in der Regel Sahne - in geschlagener Form zugegeben wird. Auch ist hier ein Einsatz von Wasser mit einer Temperatur unter 35 °C nicht möglich, da das Gemisch aus Gelatine und Trennmittel zum Verklumpen neigt.

Im Markt bereits erhältliche Produkte mit Bezeichnungen wie "Instantgelatine" auf Basis Gelatine/Maltodextrin lassen sich zwar weitgehend klumpenfrei direkt in die flüssige Sahne einrieseln und mit ihr zusammen aufschlagen. Üblicherweise wird niedrig-bloomige Gelatine zur Herstellung von Instantgelatine eingesetzt, so daß sich nur ein sehr schwaches Gel ausbilden kann. Auch durch höhere Dosierung ist keine vergleichbare Gelfestigkeit erreichbar.

Es ist mehrfach versucht worden, hier Abhilfe zu schaffen und so die Verwendung von Gelatine zu vereinfachen. So wird in der deutschen Patentschrift 44 24 866 ein Verfahren beschrieben, bei dem zunächst der Zucker mit Öl vermischt und dann eine Zumischung von Pektin erfolgt. Dies hat den Nachteil, daß sich diese Zutaten nicht innig verbinden, sondern lediglich aneinander angelagert werden. Zudem kann eine derartig hergestellte Mischung bei klaren Lebensmitteln zur Zubereitung nicht eingesetzt werden, weil dadurch eine Trübung hervorgerufen wird oder Fetttropfen an der Oberfläche zu erkennen sind.

Der Erfindung lag daher die Aufgabe zugrunde, ein tierisches bzw. mikrobiell erzeugtes Geliermittel (z.B. Gelatine) so in eine Mischung einzubringen, daß diese ohne Vorquellen und Erwärmen beim gleichmäßigen Vermischen mit dem zu verdickenden bzw. gelierenden Lebensmittel (z.B. direktes Aufschlagen mit flüssiger Sahne) das entsprechende Gel bzw. die Verdickung ausbildet.

Diese Aufgabe wird erfindungsgemäß durch den kennzeichnenden Teil der Ansprüche 1, 2, 3 und 10 gelöst. Vorteilhafte Weiterbildungen sind aus den Unteransprüchen ersichtlich.

Versucht man gemahlene tierische oder mikrobiell erzeugte Geliermittel, wie z.B. Gelatine mit Trägerstoffen wie Zuckerarten einfach zu vermischen, so wird ein Produkt erhalten, welches sich nicht klumpenfrei mit kalten wässrigen Lösungen, kalten Emulsionen oder kalten wasserhaltigen Lebensmitteln vermischen läßt. So lassen sich typischerweise Götterspeisen unter Verwendung von hoch-bloomiger Gelatine auf diese Weise nicht herstellen.

Es war daher überraschend, daß allein dadurch ein rieselfähiges und in kalten wässrigen Lösungen, kalten Emulsionen oder kalten wasserhaltigen Lebensmitteln direkt gelierendes Produkt erhalten wird, wenn feinstvermahlene Gelatine mittels Wasser und/oder Alkoholen an Saccharose oder anderen Zuckerarten angelagert wird. Dadurch lagert sich die feinstvermahlene Gelatine nicht zu einem großen unlöslichen Klumpen zusammen, sondern es bilden sich agglomerat-ähnliche Produkte mit Poren, in die Flüssigkeit eindringen kann. So sind die Vorteile der feinstvermahlenen Gelatine wie Quellung und Lösung noch gegeben. Nur auf diesem Wege können bei Einsatz klarer Flüssigkeiten auch klare Gele erhalten werden.

Die Erfindung wird anhand der folgenden Beispiele näher erläutert:

### Beispiel 1

In einem Mischer werden 7 kg Saccharose (Korngröße 0,4 mm bis 1 mm) vorgelegt, 140 ml Wasser zugegeben und eine einheitlich durchfeuchtete Mischung hergestellt. Über eine Siebvorrichtung (Maschenweite 0,5 mm) wird 1 kg gemahlene Gelatine in den laufenden Mischer eingesiebt und mit dem vorgelegten angefeuchteten Zucker innig vermischt.

### Beispiel 2

In einem Mischer werden 4 kg Saccharose (Korngröße 0,4 mm bis 1 mm) vorgelegt, 140 ml Wasser zugegeben und daraus eine durchfeuchtete Mischung hergestellt. Mittels einer Schneckendosierung läßt man ein zuvor hergestelltes Gemenge aus 1 kg gemahlener Gelatine und 3 kg Dextrose langsam in den laufenden Mischer einrieseln, wobei ein einheitlich gemischtes rieselfähiges Produkt entsteht.

### Beispiel 3

In einem Mischer werden 7 kg Fructose (Korngröße 0,4 mm bis 1 mm) vorgelegt, 15 g Glycerin zugegeben und daraus eine einheitlich durchfeuchtete Mischung hergestellt. Mittels einer Schneckendosierung läßt man ein zuvor hergestelltes Gemenge aus 2 kg gemahlener Gelatine und 1 kg Dextrose langsam in den laufenden Mischer einrieseln, wobei ein einheitlich gemischtes rieselfähiges Produkt entsteht.

## Patentansprüche

1. Verfahren zur Herstellung einer in Wasser, wässrigen Lösungen, Emulsionen oder wasserhaltigen Lebensmitteln von Temperaturen über 4 °C leicht löslichen und/oder quellenden kristallinen, tierische und/oder mikrobielle Geliermittel und Zuckerarten enthaltende Lebensmittelzubereitung mit gelierenden und/oder verdickenden Eigenschaften, bei der das Geliermittel durch Zusatz von Wasser und/oder Alkoholen als dünne Schicht auf der Oberfläche der Zuckerart angelagert wird, **gekennzeichnet durch** folgende Schritte:
a. Fein vermahlene Gelier- und/oder Verdickungsmittel tierischen und/oder mikrobiellen Ursprungs werden mit einer Zuckerart oder einer Mischung aus Zuckerarten in vorgegebenem Verhältnis einheitlich gemischt.
b. In einem separaten Mischer werden Zuckerarten **durch** Vermischen mit 0,01 % bis 10 % Wasser (vorzugsweise 3 %) und/oder ein- oder mehrwertigen Alkoholen (vorzugsweise 0,2 %) angefeuchtet.
c. Die angefeuchteten Zuckerarten aus b. werden dem in Schritt a. hergestellten Gemenge innig vermischt.

2. Verfahren nach Anspruch 1, **dadurch gekennzeichnet, daß**
a. in einem Mischer Zuckerarten durch Vermischen mit 0,01 % bis 10 % Wasser (vorzugsweise 3 %) und/oder ein- oder mehrwertigen Alkoholen (vorzugsweise 0,2 %) angefeuchtet werden,
b. fein vermahlenes Gelier- und/oder Verdickungsmittel tierischen und/oder mikrobiellen Ursprungs dem in Schritt a. hergestellten Gemenge innig vermischt werden.

3. Verfahren nach Anspruch 1 oder 2, **dadurch gekennzeichnet, daß** Gelierund/oder Verdickungsmittel und Zuckerarten im Verhältnis 1 : 1 bis 1 : 15 vorliegen.

4. Verfahren nach den Ansprüchen 1 oder 2 und Anspruch 3, **dadurch gekennzeichnet, daß** der Mischung gemäß den Ansprüchen 1 und 2 Fruchtsäuren und/oder Fruchtpulver und/oder Aromen und/oder Gewürze und/oder Farbstoffe und/oder Süßstoffe in vorherbestimmter Menge zugegeben werden.

5. Verfahren nach Anspruch 1 oder 2 und einem oder mehreren der vorhergehenden Ansprüche, **dadurch gekennzeichnet, daß** die Zuckerarten alle als Lebensmittel zugelassene Mono-, Di- und Polysaccharide sowie deren Monohydrate und Alkohole umfassen.

6. Verfahren nach Anspruch 1 oder 2 und einem oder mehreren der vorhergehenden Ansprüche, **dadurch gekennzeichnet, daß** die Zuckerarten ein Kornspektrum größer als 0,1 mm aufweisen.

7. Verfahren nach Anspruch 1 oder 2 und einem oder mehreren der vorhergehenden Ansprüche, **dadurch gekennzeichnet, daß** unterschiedliche tierische und/oder mikrobiell erzeugte Gelier- und/oder Verdickungsmittel in vorhergegebenem Verhältnis gemischt verwendet werden.

8. Verfahren nach Anspruch 1 oder 2 und einem oder mehreren der vorhergehenden Ansprüche, **dadurch gekennzeichnet, daß** das tierische und/oder mikrobiell erzeugte Gelier- und/oder Verdickungsmittel eine Korngröße von weniger als 2 mm aufweist.

9. Verfahren nach Anspruch 1 oder 2 und einem oder mehreren der vorhergehenden Ansprüche, **dadurch gekennzeichnet, daß** zur Stabilisierung Konservierungsmittel und/oder Antioxydantien zugegeben werden.

10. Lebensmittelzubereitung hergestellt nach den Ansprüchen 1 bis 9.
